(19) Europäisches Patentamt
European Patent Office
Office européen des brevets

(11) EP 2 939 545 B1

(12) EUROPÄISCHE PATENTSCHRIFT

(45) Veröffentlichungstag und Bekanntmachung des Hinweises auf die Patenterteilung:
**26.12.2018 Patentblatt 2018/52**

(51) Int Cl.:
***A23K 50/10*** $^{(2016.01)}$ ***A23K 20/105*** $^{(2016.01)}$

(21) Anmeldenummer: **15165321.9**

(22) Anmeldetag: **28.04.2015**

# (54) VERBESSERUNG DER FUTTERAUFNAHME VON MILCHKÜHEN MITTELS GRÜNFUTTERAROMEN

IMPROVING THE FEED INTAKE OF DAIRY COWS BY USE OF GREEN FEED AROMAS

AMÉLIORATION DE L'ABSORPTION DE FOURRAGE PAR LES VACHES LATIÈRES AU MOYEN D'ARÔME DE FOURRAGE VERT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2014 EP 14166130**

(43) Veröffentlichungstag der Anmeldung:
**04.11.2015 Patentblatt 2015/45**

(73) Patentinhaber: **BASF SE**
**67056 Ludwigshafen am Rhein (DE)**

(72) Erfinder:
- **Tröscher, Arnulf**
  **69469 Weinheim (DE)**
- **Challand, Nina**
  **68259 Mannheim (DE)**
- **Troescher, Johanna**
  **69469 Weinheim (DE)**
- **Troescher, Franziska**
  **69469 Weinheim (DE)**

(56) Entgegenhaltungen:
**EP-A2- 0 174 821 US-A- 4 806 379**

- **DATABASE WPI Week 200639 Thomson Scientific, London, GB; AN 2006-376910 XP002727419, -& JP 2006 141312 A (MEIJI SHIRYO KK) 8. Juni 2006 (2006-06-08)**
- **ANONYMOUS: "Cows grazing fresh pasture produce better milk", Cordis INTERNET CITATION, 24. Mai 2012 (2012-05-24), Seiten 1-2, XP002676602, Gefunden im Internet: URL:http://cordis.europa.eu/fetch?CALLER=PRINT_OFFR&SESSION=&ACTION=D&RCN=5203 [gefunden am 2012-05-24]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 939 545 B1

## Beschreibung

Die Erfindung betrifft die Verwendung von natürlichen oder synthetischen Grünfutteraromen zur Erhöhung der Futteraufnahme-Häufigkeit bei Milchkühen.

## Hintergrund der Erfindung

In der Michviehhaltung ist man beständig bestrebt, Milchmenge und Milchqualität aber auch die Gesundheit des Michviehs zu verbessern. Unter anderem versucht man dies durch Optimierung der Futteraufnahme- und des Fressverhaltens der Tiere zu erreichen. Wesentliche Parameter sind dabei u.a. die tägliche Trockensubstanzaufnahme (DMI), die tägliche Frischfutteraufnahme (FMI) sowie die Futteraufnahmehäufigkeit und -dauer.

Der DMI Wert ist einer der wichtigsten Parameter zur Verringerung der negativen Energiebalance, insbesondere in den ersten Wochen der Laktation bei Kühen mit höher Milchleistung. Es gibt zahlreiche Studien, welche sich mit Untersuchungen befassen, um die metabolische Regulation der DMI bei Milchkühen zu erklären (Ingvartsen, K. L. and J. B. Andersen 2000) Über einen maximierten DMI-Wert kann der Gesundheitszustand und die Lebenserwartung der Kühe verbessert werden (Bertics *et al.* 1992; Hutjens 2005, Overton 2005, 2005).

Im Fall von Rindern und Schafen beispielsweise beschreibt EP 0174 821 ein Verfahren zur Behandlung von pflanzlichen Futtermitteln für Tiere wie Silage etc. durch Besprühen mit Grünaromen, um die Akzeptanz des Futtermittels zu verbessern.

Eine höhere Futteraufnahme bedeutet eine höhere Aufnahme von Energie und anderen Nährstoffen. Dadurch kann die Leistung (Milch, tägliche Zunahme) der Tiere erhöht bzw. der Verlust an Körpersubstanz reduziert werden.

Der positive Effekt einer erhöhten Fütterungsfrequenz auf den Milchfettanteil (Erhöhung des Fettgehalts) wird beschrieben von French, N. et al in J Dairy SCI (1990) 73:1857-1863. Ein positiver Einfluss der erhöhten Fütterungsfrequenz auf die durchschnittliche tägliche Futteraufnahme (ADFI) und die durchchnittliche tägliche Zunahme (ADG) wird von Schultz, J.S. et al in The Professional Animal Scientist (2011)27: 14-18 beschrieben.

Kurz vor dem Abkalben und in den ersten (bis zu zehn) Wochen nach dem Abkalben geben Milchkühe mehr Energie über Milch ab, als sie über Futter aufnehmen können. Diese Hungerphase führt zu nachhaltigen gesundheitlichen Schäden, die sich in akuten Lahmheiten, Fettleber aber auch in Unfruchtbarkeit äußern können. Sie sind ein Hauptgrund dafür, dass Kühe heutzutage nur noch ca. 2,7 Jahre produktiv sind und danach geschlachtet werden müssen (Mertens 2011).

Eine höhere Anzahl von Mahlzeiten pro Tag mit geringerer Futteraufnahme pro Mahlzeit kann mit einem positiven Effekt auf die Pansenfermentation durch Einstellung eines stabilen pH-Wertes im Rumen verbunden sein (French and J.J. Kennelly 1990) (Schutz and J. J. Wagner,4 PAS, E. D. Sharman, PAS, N. E. Davis, and T. E. Engle 2011).

Es bestand daher die Aufgabe, einen Weg zu finden, wie das Futteraufnahmeverhalten von Milchvieh während der Laktation weiter verbessert werden kann.

## Zusammenfassung der Erfindung

Überraschenderweise konnte die obige Aufgabe durch gezielte Anreicherung von Tierfutter mit Grünfutteraromen erreicht werden.

Die moderne Milchkuhhaltung erfolgt ganzjährlich im Stall, d. h. ohne die Möglichkeit für das Vieh, auf eine Weide gehen zu können. Im Stall sind ganzjährig Silage, Heu und Kraftfutter im Einsatz. Im Gegensatz zu Weidegras verfügen diese Futtermittel nicht über die natürlichen olfaktorischen Reize, die gegebenenfalls für eine Futteraufnahme-Regulation nötig sind. Diese olfaktorischen Reize führen sowohl zu einer besseren Verteilung der Futteraufnahme über den Tag durch eine höhere Freßfrequenz, verbunden mit kleineren Malzeiten, als auch zu einer höheren Futteraufnahme. Eine durch erhöhte Futteraufnahme verbesserte Leistung bedeutet eine Erhöhung der Futterverwertung, da bei gleichem Nährstoffbedarf für die Erhaltung mehr Nährstoffe für zusätzliche Leistung zur Verfügung stehen.

## Spezielle Ausgestaltungen der Erfindung

### a) Allgemeine Definitionen

Trans-hex-2-enal (CAS-Nr. 6728-26-3/Hex-2(trans)-enal/Flavis-Nr. 05.073) und Hexanal (CAS-Nr. 66-25-1/Hexanal/Flavis-Nr. 05.008) sind natürliche oder entsprechende synthetische, chemisch definierte Aromastoffe, wie im Register für Futtermitteladditive der Europäischen Union (gemäß Regulation (EC) Nr. 1831/2003) beschrieben.

"Grünfutter" oder "Grünfuttermittel" umfassen Futtermittel, bei denen die gesamte Pflanze, meist frisch, verfüttert werden kann. Als Bespiele sind zu nennen: Gras, Mais, Getreide Klee und Leguminosen. Diese Futtermittel zeichnen sich durch einen hohen Anteil an Struktur-Kohlehydraten aus. Insgesamt ist diese Gruppe hinsichtlich Inhaltsstoffe sehr

heterogen. Gras besteht vor allem aus Struktur-Kohlenhydraten. Der Rohproteingehalt liegt im Bereich von 15 bis 25 %. Mais hingegen hat einen großen Anteil Stärke (ca. 20-40 %), hingegen mit etwa 10 % deutlich weniger Rohprotein. Daneben enthält Mais auch Strukturkohlenhydrate. Die Getreidearten sind dem Mais ähnlich; die Leguminosen prinzipiell ebenfalls, haben aber deutlich mehr Rohprotein.

"Nutzvieh" umfasst hierin insbesondere Wiederkäuer, und vor allem Ziegen, Schafe, Kälber, Rinder, und im Sinne der vorliegenden Erfindung insbesondere Milchvieh, vor allem Milchkühe und Mastrinder.

Eine "Veränderung des Freßverhaltens" ist breit zu verstehen und umfasst insbesondere eine Erhöhung der Futteraufnahme-Frequenz. Gegebenenfalls umfasst dies auch eine Erhöhung der Futteraufnahme (kg/d), wie insbesondere der Frischfutteraufnahme (FMI).

Die tägliche Trockensubstanzaufnahme (DMI) ist einer der wichtigsten Parameter zur Verringerung der negativen Energiebalance, insbesondere in den ersten Wochen der Laktation bei Kühen mit hoher Milchleistung.

Die tägliche Frischsubstanzaufnahme (FMI) ist ein weiterer wichtiger Parameter zur Beschreibung des Fressverhaltens von Vieh.

Die Futteraufnahme-Häufigkeit (Futteraufnahmefrequenz) ist definiert als Anzahl einzelner Futteraufnahmen (z.B. durch Aufsuchen eines Futtertrogs) eines Tiers pro Zeiteinheit, z.B. pro Tag.

"Carbonsäuren" sind insbesondere geradkettige oder verzweigte, insbesondere geradkettige, gesättigte oder, ein- oder mehrfach ungesättigten, gegebenenfalls substituierten $C_6$-$C_{30}$-Monocarbonsäuren Beispiele für gesättigte unverzweigte Fettsäuren sind Capronsäure, Önanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure, Behensäure, Lignocerinsäure, Cerotinsäure und Melissinsäure. Beispiele für einfach ungesättigte Fettsäuren sind Palmitoleinsäure, Ölsäure und Erucasäure. Beispiele für zweifach ungesättigte Fettsäuren sind Sorbinsäure und Linolsäure. Beispiele für dreifach ungesättigte Fettsäure sind Linolensäure und Elaeostearinsäure. Beispiele für vier- und mehrfach ungesättigte Fettsäuren sind Arachidonsäure, Clupanodonsäure, Eicosapentaensäure und Docosahexaensäure. Beispiele für substituierte Fettsäuren sind Ricinolsäure ((R)-12-Hydroxy-(Z)-9-octadecensäure). Weitere geeignete Fettsäuren sind natürlich vorkommende Fettsäuren wie Gondosäure und Neronsäure. Sind in den Fettsäuren Doppelbindungen enthalten, so können diese sowohl in cis- als auch in trans-Form vorliegen. Die Substituenten sind vorzugsweise ausgewählt unter Hydroxy- und Niedrigalkylgruppen, wie z.B. Methyl- und Ethylgruppen. Weiterhin können Ketogruppen oder Epoxygruppen, wie z.B. in der Vernolsäure im Kohlenwasserstoffrest enthalten sein. Weitere funktionelle Gruppen sind Cyclopropan-, Cyclopropen- und Cyclopentenringe, welche durch Verbrückung von zwei benachbarten Kohlenstoffatomen im Kohlenwasserstoffrest der Fettsäure ausgebildet werden können (vgl. Malvaliasäure und Chaulmoograsäure).

"PUFA" sind mehrfach ungesättigte Fettsäuren mit mindestens 2 konjugierten oder nichtkonjugierten C=C-Doppelbindungen im Fettsäuremolekül. Als Beispiele sind zu nennen: Linolensäure, Eicosapentaensäure (EPA) ((5*Z*,8*Z*,11*Z*,14*Z*,17*Z*)-Eicosa- 5,8,11,14,17-pentaensäure; oder C20:5 ($\omega$-3)) und Docosahexaensäure (DHA) ((4Z,7Z,10Z,13Z,16Z,19Z)-Docosa-4,7,10,13,16,19-hexaensäure) oder C22:6 ($\omega$-3)).

"MUFA" sind einfach ungesättigte Fettsäuren, die in cis- oder trans-Konfiguration vorkommen wie z.B. die Ölsäure oder die Vaccensäure.

Konjugierte Linolsäuren (CLA) sind eine Gruppe von Isomeren der zweifach ungesättigten $C_{18}$-Monocarbonsäure "Linolsäure", deren beiden Doppelbindungen in Position 9 und 12 und somit nicht konjugiert vorliegen. Diese wird auch mit der Kurzform "C18:2 cis-9, cis-12" bezeichnet.

"CLA" umfasst grundsätzlich alle konjugierten, zweifach-ungesättigten Isomere der Linolsäure (C18:2 cis-9,cis-12), wobei die Position der beiden Doppelbindungen in der Kohlenstoffkette zum Kettenende oder zur Carboxylgruppe hin verschoben sein kann und außerdem die Stereochemie der konjugierten Doppelbindungen jegliche Variation umfassen kann (cis/cis, trans/trans, cis/trans), wobei "cis/trans" beide Reihenfolgen "trans-cis" oder "cis-trans" umfasst, wobei jeweils die erstgenannte Konfiguration der beiden Reihenfolge die der Carboxylgruppe am nächsten liegende Doppelbindung betrifft:

Beispielhaft sei auf die im Folgenden dargestellte konjugierte Linolsäure "C18:2 cis-9, trans-11" verwiesen:

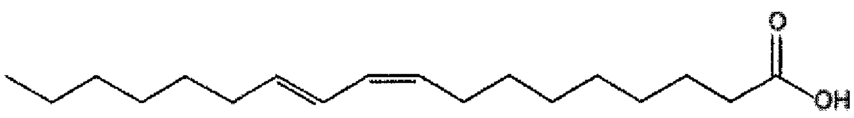

Die hierin verwendeten Bezeichnungen : cis/trans-9,11-Linolsäure; cis/trans-8,10-Linolsäure; cis/trans-11,13-Linolsäure; und cis/trans-10,12-Linolsäure; umfassen somit sowohl die cis-trans als auch die trans-cislsomere, also:

cis/trans-9,11-Linolsäure umfasst: C18 :2 cis-9, trans-11 und C18 :2 trans-9,cis 11
cis/trans-8,10-Linolsäure umfasst: C18 :2 cis-8, trans-10 und C18 :2 trans-8,cis 10

cis/trans-11,13-Linolsäure umfasst: C18 :2 cis-11, trans-13 und C18 :2 trans-11, cis 13
cis/trans-10,12-Linolsäure umfasst: C18 :2 cis-10, trans-12 und C18 :2 trans-10, cis 12

Analoges gilt für dreifach ungesättigte Linolensäure (C18 :3, cis-9, cis-12, cis-15) und den cis/trans Isomeren davon.

Obige Stoffangaben und die hierin beschriebenen Verwendungen dieser Stoffe betreffen primär den jeweiligen Reinstoff aber auch natürliche oder synthetische Stoffgemische, welche wenigstens einen dieser Stoffe z.B. wenigstens ein PUFA oder wenigstens ein CLA enthalten.

Natürliche Stoffgemische sind z.B. Fischöle oder mikrobielle Öle, welche reich an PUFAs sein können, sowie Leinöl, Sojaöl, Sonnenblumenöl, Rizinusöl, etc.
Synthetische Stoffgemische sind beispielsweise CLA -reiche Handelsprodukte wie Lutalin® der BASF SE.

**b) Besondere Ausführungsformen**

Die vorliegende Erfindung betrifft insbesondere:

1. Verwendung von natürlichen oder synthetischen Grünfutteraromen zur Erhöhung der Futteraufnahme-Häufigkeit (Futteraufnahmefrequenz) bei Milchkühen; wobei die Grünfutteraromen $C_6$-Abbaubrodukte langkettiger Fettsäuren umfassen, und wobei wenigstens eines dieser Grünfutteraromen dem Futter als Futtermittelzusatz zugegeben wird.

2. Verwendung nach Ausführungsform 1 zur Erhöhung der Futteraufnahme (kg/d).

3. Verwendung nach Ausführungsform 1 bei Milchkühen während der Laktation.

4. Verwendung nach einer der vorhergehenden Ausführungsformen, wobei die Grünfutteraromen Hexanal und /oder wenigstens ein ein- oder mehrfach ungesättigtes Analoges davon umfassen.

5. Verwendung nach Ausführungsform 4, wobei die Analoga ausgewählt sind unter 2- 3- und 4-Hexenalen, jeweils in der cis- oder trans-Form.

6. Verwendung nach Ausführungsform 4 oder 5, wobei der Aromastoff im Wesentlichen aus Hexanal und/oder einem oder mehreren seiner ein- oder mehrfach ungesättigtes Analogen besteht.

7. Verwendung nach einer der vorhergehenden Ausführungsformen, wobei der Aromastoff in Reinform, d.h. unverdünnt verwendet werden kann. Der unverdünnte Aromastoff wird entweder ungeträgert oder, zur leichteren Einarbeitung, in geträgerter Form eingesetzt. Geeignete Träger sind z.B. solche die als futtermitteltaugliche anorganische oder organische Träger bekannt sind. Als Beispiele können die unten aufgeführten Getreidefolgeprodukte, wie z.B. Weizenkleie, oder anorganische Salze, wie Kochsalz oder Calciumcarbonat, genannt werden, ohne darauf beschränkt zu sein.

8. Verwendung nach Ausführungsform 1 oder 2, zur Erhöhung der Frischfutteraufnahme (FMI) (kg/d).

9. Verwendung nach einer der vorhergehenden Ausführungsformen, wobei man das/die Grünfutteraromen in einer Menge verwendet, die ausreicht, um an die Milchkuh eine Tagesdosis von 0,05 bis 10 g/Tier/d abzugeben. Insbesondere wird das Futtermittel dazu mit dem Grünfutteraroma-Zusatz in einer Dosis von 0,0025 bis 0,5 g/kg, insbesondere 0,005 bis 0,4 g/kg, vorzugsweise 0,05 bis 0,25 g/kg und vor allem 0,1 bis 0,2 g/kg (jeweils bezogen auf das Gesamtgweicht des supplementierten Futters) supplementiert.

10. Ebenfalls ist hierin beschrieben ein Verfahren zur Beeinflussung des Fressverhaltens durch Erhöhung der Futteraufnahme-Häufigkeit (Futteraufnahmefrequenz) von Milchkühen, wobei man der Milchkuh Futter verabreicht, welches mit einem Futterzusatz gemäß der Definition in einer der Ausführungsformen 1 bis 7 ergänzt ist.

11. Zudem ist hierin beschrieben ein Futtermittelzusatz, umfassend wenigstens ein Grünfutteraroma nach einer der Ausführungsformen 1 bis 7 in Kombination mit wenigstens einem weiteren übliche Futterzusatz, insbesondere ausgewählt unter Vitaminen , Mineralien, Spurenelementen und Fettsäuren, insbesondere konjugierten Fettsäuren.

12. Futtermittelzusatz nach Ausführungsform 11, wobei die Fettsäure eine mehrfach ungesättigte Fettsäure, insbesondere ein Isomeres der Linolsäure umfasst.

13. Futtermittelzusatz nach Ausführungsform 12, wobei die mehrfach ungesättigte Fettsäure eine CLA ist.

14. Futtermittelzusatz nach Ausführungsform 13, wobei die CLA ausgewählt ist unter
cis/trans-9,11-Linolsäure,
d.h. C18 :2 cis-9, trans-11 und C18 :2 trans-9,cis 11
cis/trans-8,10-Linolsäure;
d.h.C18 :2 cis-8, trans-10 und C18 :2 trans-8,cis 10
cis/trans-11,13-Linolsäure;
d.h. C18 :2 cis-11, trans-13 und C18 :2 trans-11,cis 13
cis/trans-10,12-Linolsäure;
d.h. C18 :2 cis-10, trans-12 und C18 :2 trans-10, cis 12
cis/cis-9,11-Linolsäure,
trans/trans-9,11-Linolsäure,
cis/cis-8,10-Linolsäure
trans/trans-8, 1 O-Linolsäure
cis/cis-11,13-Linolsäure
trans/trans-11,13-Linolsäure
cis/cis-10,12-Linolsäure
trans/trans-10,12-Linolsäure; und Gemischen von wenigstens zwei der oben genannten Verbindungen.

15. Futtermittelzusatz nach Ausführungsform 14 wobei die CLA ausgewählt ist unter
9-cis,11-trans-Linolsäure;
10-trans,12-cis-Linolsäure; und
Gemischen davon.

**c) Herstellung des mit Grünfutteraromen supplementierten Futtermittels**

Die Herstellung erfolgt in einfacher Weise dadurch, dass man einer vorgelegten unadditivierten Futtermischung oder einem vorgelegten Futtermittelzusatz die gewünschte Menge an Grünfutteraroma, insbesondere Hexanal oder einem ein- oder mehrfach ungesättigtem Analogen davon oder eine Mischung solcher Aromen ggf. im Gemisch mit weiteren Zusätzen, insbesondere jedoch als Reizstoff/Reinstoffgemisch solcher Grasaromen ohne weitere Zusätze, zugibt (z.B. Zutropfen oder Aufsprühen einer verdünnten oder insbesondere unverdünnten Lösung des Aromastoffs/Aromastoffgemischs; oder Zugabe einer Aromastoff-haltigen Vormischung, z.B. eines mit dem Aromastoff/Aromastoffgemisch getränkten futtermitteltauglichen Trägers zur Totalen Mischration (TMR)) und anschließend bis zur gleichmäßigen Verteilung des Aromas weiter mischt. Das so hergestellte Futter kann dann direkt verfüttert werden.

**d) Futtermittelbestandteile**

Typische Futtermittelbestandteile, die zur Herstellung erfindungsgemäß verwendeter Futtermittel brauchbar sind, umfassen Einzelfuttermitteln pflanzlichen oder tierischen Ursprungs gemäß FMV (Futtermittelverordnung), wie z.B. Getreidefolgeprodukte , Weizenfuttermehl, Weizenkleie; Extraktionsschrote, Trester, Melasseschnitzel, Fischmehl, Fleischknochenmehle; und/oder mineralischen Einzelfuttermitteln gemäß FMV, wie z.B. Carbonate, Phosphate, Sulfate, Propionate. Ebenfalls geeignet sind Getreide, wie Weizen, Roggen, Gerste, Hafer, Mais, Hirse oder Triticale; Getreidefolgeprodukte (Nebenprodukte der Müllerei), wie Kleien, Grießkleien, Weizengrießkleien, Futtermehle oder Nachmehle; Nebenprodukte aus der Ölgewinnung (Extraktionsschrote, Expeller, Kuchen); Nebenprodukte aus der Gewinnung von Zucker (Melasse, Trockenschnitzel, Futterzucker, Pülpe, Kartoffelstärke, Maiskleber, Weizenkleber); Nebenerzeugnisse des Gärungsgewerbes, Biertreber, Hefe, Malzkeime, Schlempe; sowie tierische und sonstige Futtermittel, wie Blutmehl, Fischmehl, Presssaft, Kartoffeleiweiß.

Insbesondere sind zu nennen Weizen, Körnermais, Gerste, Hafer; Sojabohnen; Getreidemehle, wie Weizen- oder Maismehl, Sojabohnenmehl, Rübenmelasseschnitzel, Weizengrießkleie, Weizennachmehl, Maiskleberfutter, Sojaextraktionsschrot, Rapsextraktionsschrot, Biertreber, Getreideschlempe, Rübenmelasse, Haferkleie; Zucker, wie Traubenzucker, und Zuckeralkohole, weiterhin proteinhaltige Bestandteile wie Sojakonzentrat, Fischmehl, Glutene wie Mais- oder Weizengluten, Öle und Fette, sowie Nutrazeutika , wie z.B. freie Aminosäuren, deren Salze, Vitamine (wie z.B. A, D, E) und Spurenelemente (wie z.B. Cu als $CuSO_4$), mineralische Bestandteile, wie Calciumcarbonat, Natriumchlorid; Phosphate, sowie gegebenenfalls Verarbeitungshilfsmittel, z. B. Gleitmittel, inerte Füllstoffe und dergleichen, und gegebenenfalls Konservierungsmittel. Typische Milchleistungsfutterzusammensetzungen enthalten z. B. Mais, Weizen, Gerste, Hafer, Roggen, Zitrustrester, Sojaextraktionsschrot, Rapsextraktionsschrot, Sojaschalen, Palmkerexpeller, DDGS, Maiskleberfutter, Zuckerrübenschnitzel, Weizengrieskleie, Weizenkleie, Leinsaat, Melasse, Kalk, Salz, Vitamin-

und Spurenelement-Vormischung.

Die Erfindung wird nun unter Bezugnahme auf folgende Ausführungsbeispiele näher erläutert.

**Experimenteller Teil**

**Beispiel 1: Untersuchung des Einflusses von Trans-hex-2-enal und Hexanal auf die Futteraufnahme von Milchkühen mit hoher Milchleistung (Deutsches Holsteinrind)**

Ziel der vorliegenden Untersuchung ist es festzustellen, ob 4,3 g/Kuh/Tag von Trans-hex-2-enal oder 4,3 g/Kuh/Tag von Hexanal den DMI-Wert, die Milchleistung, die Milchzusammensetzung oder das Futteraufnahmeverhalten (Zeitdauer, Frequenz, etc.) von Milchkühen beeinflussen.

**a) Material und Methoden**

1. Behandlungsschema

Insgesamt 62 Deutsch-Holstein-Rinder (Lehr- und Versuchsanstalt für Viehhaltung Hofgut Neumühle, DLR Westpfalz) wurden zufällig auf drei vergleichbare Tiergruppen aufgeteilt (vgl. Tabelle 1).

**Tabelle 1: Klassifizierung der Kühe**

| Gruppe | Ø Tage in Milch (DIM) | Ø Laktationszahl | Ø Milch (kg/Tag) |
|---|---|---|---|
| Kontrolle (n = 22) | 136 +/- 61 | 2,6 +/- 1,6 | 33,5 +/- 5,4 |
| Gruppe A* (n = 20) | 134 +/- 87 | 2,5 +/- 1,3 | 33,9 +/- 6,6 |
| Gruppe B* (n = 20) | 136 +/- 82 | 2,6 +/- 1,5 | 33,9 +/- 7,6 |
| (A*: Trans-hex-2-enal; B*: Hexanal) | | | |

Studienbeginn war die Kalenderwoche 18 des Versuchsjahrs und Studienende war Kalenderwoche 24 des gleichen Jahres. Der Futterverbrauch wurde mittels Futtertrögen mit elektronischer Gewichtsermittlung, hergestellt von Insentec B.V. (Marknesse, Niederlande), bestimmt. Das System identifiziert jedes Tier durch Scannen des jeweiligen Transponders am Halsband der jeweiligen Kuh mit Hilfe einer Lichtschranke. Nach der Identifikation wird dem Tier der freie Zugang zum Futtertrog gewährt, und es wird automatisch die Menge an aufgenommenem Futter bei jedem Besuch des Trogs aufgezeichnet.

Das System ermittelt somit sämtliche Besuche einer jeden Kuh am Futtertrog, die jeweilige Futteraufnahme und der Dauer des jeweiligen Besuchs. Die Futtertröge wurden einmal täglich etwa um 06.30 Uhr am Morgen mit einer Menge von etwa 70 kg Futter befüllt, nachdem das restliche Futter des Vortags entfernt worden war. Während des morgendlichen Melkens wurden die Futtertröge zur Reinigung für eine Dauer von 20 bis 30 Minuten geschlossen.

Der Melkstand war eine Kombination aus einem Fischgräten-Melkstand mit Platz für acht Kühe und einem side-by-side-Melkstand mit Platz für zehn Kühe, hergestellt von GEA Farm Technologies (Boenen, Deutschland).

Die Milchausbeute wurde individuell bei jedem Melkvorgang bestimmt und von der Herdenmanagement-Software DairyPlan C21 (GEA Farm Technologies, Boenen, Deutschland) aufgezeichnet. Die Kühe wurden zweimal täglich um 05.00 Uhr morgens und 15.30 Uhr nachmittags gemolken. Frischwasser war jederzeit frei zugänglich.

Jeweils Montags wurden nach jedem Melken Milchproben genommen und für jede Kuh die Milchzusammensetzung (Fett, Protein, somatische Zellzahl) bestimmt. Der energiekorrigierte Milchwert (ECM) wurde nach folgender Gleichung bestimmt:

$$\text{ECM} = (1{,}05 + 0{,}38 \times \text{Milchfett (\%)} + 0{,}21 \times \text{Protein (\%)}/3{,}28.$$

Sämtliche Kühe erhielten eine Totale Mischration (TMR) (Tabelle 2) mit einer kalkulierten mittleren täglichen Futteraufnahme von 22 kg Trockenmaterial (DM). Trans-hex-2-enal und Hexanal wurden über einen Premix mit Weizenkleie (Trans-hex-2-enal/Weizenkleie für Gruppe A und Hexanal/Weizenkleie für Gruppe B) in die TMR eingemischt und so verfüttert.

**Tabelle 2: Zusammensetzung und Nährstoffanalyse des Futters (kg DM und % DM)**

| Bestandteil | Kontrolle | Gruppe A* | Gruppe B* |
|---|---|---|---|
| Zuckerrübensilage | | 4,0 (17,8) | |
| Grassilage | | 4,6 (21,3) | |
| Maissilage | | 4,6 (21,1) | |
| Heu | | 0,4 (1,2) | |
| Stroh | | 0,3 (2,0) | |
| Gerste | | 1,8 (8,0) | |
| Maisschrot | | 2,2 (10,0) | |
| Lösungsmittel-extrahiertes Rapsmehl | | 3,5 (16,1) | |
| Salz, Kalkstein, Harnstoff, Mineralien | | 0,5 (2,5) | |
| Trans-hex-2-enal (g/Kuh/Tag) | -- | 4,3 | -- |
| Hexanal (g/Kuh/Tag) | -- | -- | 4,3 |
| NEL (Nettolaktationswirkungsgrad) (MJ/kg DM) | | 6,8 | |
| Verwertbares Roheiweiß (g/kg DM) | | 152 | |
| Pansen-Stickstoff-Bilanz (g/kg DM) | | 0,4 | |
| (A*: Trans-hex-2-enal; B*: Hexanal) | | | |

Proben der TMR wurden täglich jeder der Rationen entnommen, zu einer Wochenprobe zusammengefasst und bis zur Bestimmung des DM-Gehalts der TMR's eingefroren. Proben sämtlicher Futterbestandteile wurden alle 14 Tage genommen, eingefroren und über den gesamten Fütterungsversuch bis zur Laboranalyse gepoolt.

2. Statistische Analysen

Ein Standardmodell für die statistische Analyse mit allen Parameters wurde auf die wöchentlichen Daten angepasst. Es handelte sich um ein allgemeines, lineares, gemischtes Modell mit der Kuh als Zufalleffekt und beinhaltete folgende Ko-Variablen:

1. die Laktationsnummer als kategorische Variable

2. die Laktationswoche als kontinuierliche Variable einschl eines quadratischen Terms

3. die Versuchswoche als kategorische Variable

Für den Behandlungseffekt wurde ein "overall" P-Wert präsentiert sowie ein P-Wert für die Unterschiede zwischen den Gruppen, welche sowohl angepasst als auch unangepasst mittels Tukey-Test geprüft wurden.

**b) Ergebnisse**

1) DMI und Milchproduktion

Die Kühe zeigten eine höhere ($p < 0,0001$) Frischfutteraufnahme (FMI)-Wert in Gruppe A und Gruppe B im Vergleich zu der Kontrollgruppe. Den höchsten täglichen FMI-Wert erreichte Gruppe B mit einem Mittelwert von 48,3 kg FMI pro Tag. Dabei wurde kein Unterschied zwischen den Gruppen für den täglichen DMI-Wert festgestellt.
Auch auf Basis der Trockenmasseaufnahme (DMI) ergab sich ein signifikanter Vorteil für die beiden Gruppen A und B gegenüber der Kontrollgruppe (A vs Kontrolle: $p<0,067$ und B vs Kontrolle: $p<0,0234$). Dadurch, dass zur Ermittlung der Trockenmasse zusätzliche Prozesse (Probenziehen, Trocknen, Wiegen) notwendig sind, ergeben sich zusätzliche Streuungen, die die Unterschiede zwischen den Gruppen reduzieren.

Kühe der Gruppe A besuchten den Futtertrog 48,6-mal pro Tag; die Gruppe B besuchte den Trog 45,2-mal am Tag. Im Gegensatz zu diesen Ergebnissen beobachtete man bei der Kontrollgruppe lediglich 33,1 Besuche pro Tag im Durchschnitt. Somit besuchten Tiere der Gruppe A den Futtertrog um 47% und Tiere der Gruppe B um 37% häufiger als Tiere der Kontrollgruppe (Tabelle 3)

Keine Unterschiede wurden in Bezug auf die tägliche Milchausbeute und die Milchzusammensetzung zwischen

den Gruppen beobachtet.

**Tabelle 3: Futteraufnahme, Milchproduktion, Milchzusammensetzung und körperlicher Zustand (LSQ-Mittelwerte)**

| Bestandteile | Anzahl der Werte | Kontrollgruppe (n = 22) | Gruppe A* (n = 20) | Gruppe B* (n = 20) | p-Wert |
|---|---|---|---|---|---|
| FMI[a] (kg/d) | 62 | 43,6[a] | 47,8[b] | 48,3[b] | p < 0,05 |
| DMI (kg/d) | 62 | 22,2[a] | 23,5[ab] | 23,8[b] | p<0,05 |
| DMI (% von BW[b]) | 62 | 3,3 | 3,6 | 3,7 | keine Angabe |
| Besuchshäufigkeit | 62 | 33,1[a] | 48,6[b] | 45,2[b] | p < 0,0001 |
| Freßdauer (min) | 62 | 184[a] | 206[ab] | 212[b] | p<0,05 |
| Milchertrag (kg/d) | 62 | 31,6 | 33,1 | 32,7 | keine Angabe |
| ECM (kg/Tag) | 62 | 30,2 | 31,1 | 31,3 | keine Angabe |
| Milchfett (%) | 62 | 3,69 | 3,66 | 3,77 | keine Angabe |
| Milcheiweiß (%) | 62 | 3,36 | 3,26 | 3,28 | keine Angabe |
| Milchfettertrag (kg/d) | 62 | 1,16 | 1,19 | 1,22 | keine Angabe |
| Milcheiweißertrag (kg/d) | 62 | 1,04 | 1,06 | 1,06 | keine Angabe |
| MUN[c] (mg/l) | 62 | 239 | 236 | 241 | keine Angabe |
| Körpergewicht (kg) | 62 | 670 | 671 | 653 | keine Angabe |
| BFT[d] (cm) | 62 | 0,96 | 0,93 | 0,92 | keine Angabe |

A*: Trans-hex-2-enal; B*: Hexanal; [a]: Frischfutteraufnahme; [b]: BW = Körpergewicht; [c]: Milch-Harnstoff-Stickstoff; [d]: BFT = Back Fat Thickness Rückenfettdicke

2) Zusammenfassung

Das Ziel dieser Untersuchung war es festzustellen, welchen Einfluss Trans-hex-2-enal und Hexanal auf die Futteraufnahme (FMI, DMI), die Milchproduktion und die Milchzusammensetzung zeigen.

Trans-hex-2-enal und Hexanal erhöhten den täglichen FMI-Wert im Vergleich zur Kontrollgruppe in signifikanter Weise. Dies gilt auch für den DMI-Wert.. Keine Unterschiede im Vergleich zur Kontrollgruppe gab es hinsichtlich der täglichen Milchproduktion und der Milchzusammensetzung. Die Gruppen A und B besuchten die Futtertröge 47 bzw. 37% häufiger pro Tag als die Kontrollgruppe. Eine höhere Anzahl von Mahlzeiten pro Tag mit geringerer Futteraufnahme pro Mahlzeit und signifikant längerer Freßdauer kann mit einem positiven Effekten auf die Pansenfermentation durch Einstellung eines stabilen pH-Wertes im Pansen assoziiert werden. Ein stabiler pH-Wert im Pansen wird in der Literatur als wichtige Voraussetzung für eine hohe Leistung (Milch und tägliche Zunahmen) und gute Gesundheit bewertet. Entsprechend werden Produkte beworben und eingesetzt wie: Puffersubstanzen, Antibiotika und Lebendhefen.

References

Bertics, SJ, Ric R. Grummer, Carlos Cadorniga-Valino, Emily E. Stoddard (1992) Effect of Prepartum Dry Matter Intake on Liver Triglyceride Concentration and Early Lactation. Journal of Dairy Science 75, 1914-1922.

French, N, J.J. Kennelly (1990) Effects of Feeding Frequency on Ruminal Parameters, Plasma Insulin, Milk Yield, and Milk Composition in Holstein Cows. Journal of Dairy Science 73, 1857-1863.

Hutjens, MF (2005) Dairy Efficiency and Dry Matter Intake. In 'Proceedings of the 7th Western Dairy Management Conference' pp. 71-76. (Reno, NV)

Ingvartsen, K. L. and J. B. Andersen (2000) Integration of Metabolism and Intake Regulation: A Review Focusing on Periparturient Animals 83, 1573-1597.

Mertens, H (2011) Leistung ohne Grenzen. Milchpraxis 2011 (1), 12-14.

N. French, J.J. Kennelly Effects of Feeding Frequency on Ruminal Parameters, Plasma Insulin, Milk Yield, and Milk Composition in Holstein Cows

Overton, TR (2005) Optimizing Intake in Dry and Prefresh Cows [Online]. Available at http://www.wdmc.org/2011/Optimizing%20Intake%20in%20Dry%20and%20Prefresh%20Co ws%20pg%20195-206.pdf (verified 14 April 2014)

Schutz, JS, J. J. Wagner,4 PAS, E. D. Sharman, PAS, N. E. Davis, and T. E. Engle (2011) Effect of feeding frequency on feedlot steer performance. The Professional Animal Scientist 27, 14-18.

## Patentansprüche

1. Verwendung von natürlichen oder synthetischen Grünfutteraromen zur Erhöhung der Futteraufnahme-Häufigkeit bei Milchkühen, wobei die Grünfutteraromen $C_6$-Abbauprodukte langkettiger Fettsäuren umfassen, und wobei wenigstens eines dieser Grünfutteraromen dem Futter als Futtermittelzusatz zugegeben wird.

2. Verwendung nach Anspruch 1 zur Erhöhung der Futteraufnahme (kg/d).

3. Verwendung nach Anspruch 1 bei Milchkühen während der Laktation.

4. Verwendung nach einem der vorhergehenden Ansprüche, wobei die Grünfutteraromen Hexanal und / oder wenigstens ein ein- oder mehrfach ungesättigtes Analoges davon umfassen.

5. Verwendung nach Anspruch 4, wobei die Analoga ausgewählt sind unter 2-, 3- und 4-Hexenalen, jeweils in der cis- oder trans-Form.

6. Verwendung nach Anspruch 4 oder 5, wobei der Aromastoff im Wesentlichen aus Hexanal und/oder einem oder mehreren seiner ein- oder mehrfach ungesättigten Analogen besteht.

7. Verwendung nach einem der vorhergehenden Ansprüche, wobei der Aromastoff unverdünnt, gegebenenfalls aufgebracht auf einem futtermitteltauglichen Träger, eingesetzt wird.

8. Verwendung nach Anspruch 1 oder 2, zur Erhöhung der Frischfutteraufnahme (FMI) (kg/d).

9. Verwendung nach einem der vorhergehenden Ansprüche, wobei man das/die Grünfutteraromen in einer Menge verwendet, die ausreicht um an die Milchkuh eine Tagesdosis von 0,05 bis 10g/Tier/d abzugeben.

## Claims

1. The use of natural or synthetic green-fodder flavorings for increasing the frequency of fodder intake in dairy cows, wherein the green-fodder flavorings encompass $C_6$ degradation products of long-chain fatty acids and wherein at least one of said green-fodder flavorings is added to the fodder as feed additive.

2. The use according to claim 1 for increasing fodder intake (kg/day).

3. The use according to claim 1 in dairy cows during lactation.

4. The use according to any of the preceding claims, wherein the green-fodder flavorings encompass hexanal and/or at least one monounsaturated or polyunsaturated analog thereof.

5. The use according to claim 4, wherein the analogs are selected from 2-, 3- and 4-hexenals, in each case in the cis- or trans-form.

6. The use according to claim 4 or 5, wherein the flavoring substantially consists of hexanal and/or one or more of its monounsaturated or polyunsaturated analogs.

7. The use according to any of the preceding claims, wherein the flavoring is used in undiluted form, optionally applied to a feed-suited support.

8. The use according to claim 1 or 2 for increasing fresh-fodder intake (FMI) (kg/day).

9. The use according to any of the preceding claims, wherein the green-fodder flavoring(s) is/are used in a quantity sufficient to deliver a daily dose of from 0.05 to 10 g/animal/day to the dairy cow.

**Revendications**

1. Utilisation d'arômes de fourrage vert naturels ou synthétiques pour augmenter la fréquence d'absorption de fourrage chez des vaches laitières, les arômes de fourrage vert comprenant des produits $C_6$ de décomposition d'acides gras à chaîne longue et au moins un de ces aromes de fourrage vert étant ajouté au fourrage en tant qu'additif de fourrage.

2. Utilisation selon la revendication 1 pour augmenter l'absorption de fourrage (kg/j).

3. Utilisation selon la revendication 1 chez des vaches laitières pendant la lactation.

4. Utilisation selon l'une quelconque des revendications précédentes, dans laquelle les arômes de fourrage vert comprennent de l'hexanal et/ou au moins un analogue mono- ou polyinsaturé de celui-ci.

5. Utilisation selon la revendication 4, dans laquelle les analogues sont choisis parmi le 2-, 3- et 4-hexénal, à chaque fois sous la forme cis ou trans.

6. Utilisation selon la revendication 4 ou 5, dans laquelle l'arôme est essentiellement constitué par de l'hexanal et/ou un ou plusieurs de ses analogues mono- ou polyinsaturés.

7. Utilisation selon l'une quelconque des revendications précédentes, dans laquelle l'arôme est utilisé sous forme non diluée, éventuellement appliqué sur un support approprié pour le fourrage.

8. Utilisation selon la revendication 1 ou 2, pour augmenter l'absorption de fourrage frais (FMI) (kg/j).

9. Utilisation selon l'une quelconque des revendications précédentes, dans laquelle le ou les arômes de fourrage vert sont utilisés en une quantité suffisante pour donner à la vache laitière une dose quotidienne de 0,05 à 10 g/animal/j.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0174821 A
- EC 18312003


### In der Beschreibung aufgeführte Nicht-Patentliteratur


- **FRENCH, N. et al.** *J Dairy SCI,* 1990, vol. 73, 1857-1863
- **SCHULTZ, J.S. et al.** *The Professional Animal Scientist,* 2011, vol. 27, 14-18
- **BERTICS, SJ ; RIC R. GRUMMER ; CARLOS CADORNIGA-VALINO ; EMILY E. STODDARD.** Effect of Prepartum Dry Matter Intake on Liver Triglyceride Concentration and Early Lactation. *Journal of Dairy Science,* 1992, vol. 75, 1914-1922
- **FRENCH, N ; J.J. KENNELLY.** Effects of Feeding Frequency on Ruminal Parameters, Plasma Insulin, Milk Yield, and Milk Composition in Holstein Cows. *Journal of Dairy Science,* 1990, vol. 73, 1857-1863
- **HUTJENS, MF.** Dairy Efficiency and Dry Matter Intake. *Proceedings of the 7th Western Dairy Management Conference,* 2005, 71-76
- **INGVARTSEN, K. L. ; J. B. ANDERSEN.** Integration of Metabolism and Intake Regulation. *A Review Focusing on Periparturient Animals,* 2000, vol. 83, 1573-1597
- **MERTENS, H.** Leistung ohne Grenzen. *Milchpraxis,* 2011, vol. 1, 12-14
- **N. FRENCH ; J.J. KENNELLY.** *Effects of Feeding Frequency on Ruminal Parameters, Plasma Insulin, Milk Yield, and Milk Composition in Holstein Cows*
- **OVERTON, TR.** *Optimizing Intake in Dry and Prefresh Cows,* 14. April 2014, http://www.wdmc.org/2011/Optimizing%20Intake%20in%20Dry%20and%20Prefresh%20Co ws%20pg%20195-206.pdf
- **SCHUTZ, JS ; J. J. WAGNER.** Effect of feeding frequency on feedlot steer performance. *The Professional Animal Scientist,* 2011, vol. 27, 14-18